Europäisches Patentamt

European Patent Office

Office européen des brevets

(11) Veröffentlichungsnummer: **0 271 821**

**A2**

(12) **EUROPÄISCHE PATENTANMELDUNG**

(21) Anmeldenummer: 87118216.8

(22) Anmeldetag: 09.12.87

(51) Int. Cl.4: **B60S 1/48**

(30) Priorität: 18.12.86 DE 3643245
03.11.87 DE 3737241

(43) Veröffentlichungstag der Anmeldung:
22.06.88 Patentblatt 88/25

(84) Benannte Vertragsstaaten:
AT BE CH DE ES FR GB GR IT LI LU NL SE

(71) Anmelder: Müller, Fritz, Dipl.-Ing.
Stentenbergstrasse 31
D-5275 Bergneustadt 1(DE)

(72) Erfinder: Müller, Fritz, Dipl.-Ing.
Stentenbergstrasse 31
D-5275 Bergneustadt(DE)
Erfinder: Lohrum, Anton
Lenneuferstrasse 12
D-5800 Hagen 5(DE)

(74) Vertreter: Louis, Walter; Dipl.-Ing. et al
Patentanwälte Dipl.-Ing. Walter Louis
Dipl.-Ing. Günter Louis Stubertal 3
D-4300 Essen 1(DE)

(54) Vorrichtung für Kraftfahrzeuge mit flüssigkeitsgekühltem Motor zum Erwärmen von Scheibenwaschflüssigkeit oder dergleichen.

(57) Die bei Kraftfahrzeugen mit flüssigkeitsgekühltem Motor anwendbare Vorrichtung zum Erwärmen von Scheibenwaschflüssigkeit oder dergleichen besteht aus einem Wärmetauscher, dessen zylinderförmiges, an den beiden Stirnseiten mit Stutzen zum Anschließen von Kühlflüssigkeitsschlauchleitungen des Motors ausgebildetes Gehäuse axial in zwei halbzylindrische Schalen geteilt ist, die an ihren aneinanderstoßenden Längsrändern dicht miteinander verbindbar sind. Zwischen die beiden Schalen ist eine in Gehäuselängsrichtung schraubenförmig gewundene, von der zu erwärmenden Flüssigkeit durchflossene Rohrwendel eingelegt, deren radial aus dem Gehäuse herausgeführte Rohrenden durch radial auf der Umfangswandung von wenigstens einer Schale fest angeordnete Durchführungshülsen hindurchgeführt sind. Auf das äußere Ende der Durchführungshülsen sind Überwurfmuttern aufschraubbar, die zusammen mit auf die Rohrenden aufgeschobenen Dichtungsringen die Rohrenden in den Durchführungshülsen abdichten.

Fig. 1

# Vorrichtung für Kraftfahrzeuge mit flüssigkeitsgekühltem Motor zum Erwärmen von Scheibenwaschflüssigkeit oder dergleichen

Die Erfindung bezieht sich auf eine Vorrichtung für Kraftfahrzeuge mit flüssigkeitsgekühltem Motor zum Erwärmen von Scheibenwaschflüssigkeit oder dergleichen gemäß dem Oberbegriff des Anspruchs 1.

Es sind verschiedene Einrichtungen für Kraftfahrzeuge bekannt, um die vom Verbrennungsmotor ohnehin freigesetzte, mit dem Kühlwasser zum Motorkühler abzuführende Wärme in einem Wärmetauscher zur Erzeugung von warmer Scheibenwaschflüssigkeit auszunutzen. Aus der DE-PS 32 32 371 ist eine heizbare Scheibenwaschvorrichtung bekannt, deren in der Kühlwasserschlauchleitung angeordneter Wärmetauscher aus einem von dem Kühlwasser durchflossenen rohrförmigen Gehäuse besteht, in dem koaxial ein doppelwandiges Rohr angeordnet ist, dessen Hohlraum den Wärmetauscherkanal für die Waschflüssigkeit bildet. Die beiden zu dem Hohlraum des doppelwandigen Rohres führenden Anschlußnippel, an die die Waschflüssigkeitsleitung angeschlossen wird, stehen radial von dem doppelwandigen Rohr ab und ragen durch die Gehäusewandung hindurch. Bei einer solchen Wärmetauscherausbildung kann das doppelwandige Rohr nur ohne die Anschlußnippel axial in das rohrförmige Gehäuse eingesetzt werden und können die Anschlußnippel erst nach dem Einsetzen des doppelwandigen Rohres in das Gehäuse durch dessen Wandung hindurchgesteckt und an das innenliegende doppelwandige Rohr angeschlossen werden, was einen komplizierten und teuren Herstellungsaufwand erfordert. Aus der DE-OS 21 12 473 ist ein Wärmetauscher für eine heizbare Scheibenwaschvorrichtung bekannt, dessen vom Kühlwasser durchflosse nes rohrförmiges Gehäuse an den Enden durch aufgesetzte, Schlauchanschlußstutzen enthaltende Stirndeckel verschlossen ist und in dem als Wärmetauscherkanal für die Waschflüssigkeit eine in Gehäuselängsrichtung schraubenförmig gewundene Rohrwendel angeordnet ist, deren Anschlußenden für die Waschflüssigkeitsleitung an dem einen Wärmetauscherende radial und an dem anderen Wärmetauscherende schrägwinkelig zur Gehäuselängsachse durch Öffnungen des rohrförmigen Gehäuses bzw. der Stirndeckel herausragen. Die Rohrwendel läßt sich nur dann in das Gehäuse einbauen, wenn das schrägwinkelige Anschlußende zunächst axial gerichtet ist, um beim Einführen der Rohrwendel in das rohrförmige Gehäuse mit diesem Anschlußende voran durch das rohrförmige Gehäuse hindurchzupassen, und nach dem Einsetzen der Rohrwendel in das rohrförmige Gehäuse in die gewünschte bzw. erforderliche Schräglage abgebogen wird. Dies kann zu einer Beschädigung des Werkstoffs der Rohrwendel führen. Diese Wärmetauscherausbildung erfordert auch einen hohen Herstellungsaufwand, um die Stirndeckel dicht und fest mit dem rohrförmigen Gehäuse zu verbinden, beispielsweise durch eine ringsum dichte Verlötung der zusammenstoßenden bzw. sich überlappenden Ränder des Blechgehäuses und der Blechdeckel, und um die Anschlußenden der Rohrwendel in den Durchführungsöffnungen des rohrförmigen Gehäuses bzw. der Stirndeckel zuverlässig gegen einen Austritt von Kühlwasser aus dem Wärmetauscher abzudichten, beispielsweise durch Einlöten einer Kupferrohrwendel in den Durchführungsöffnungen des rohrförmigen Blechgehäuses und der Blechdeckel.

Die Erfindung hat zur Aufgabe, eine Vorrichtung der eingangs genannten Art zu schaffen, die bequemer, schneller und billiger aus vorgefertigten Einzelteilen zusammenbaubar ist als die vorstehend geschilderten bekannten Wärmetauscher und die vor allem auch an den Stellen, an denen die Anschlußenden der Rohrwendel aus dem Wärmetauschergehäuse herausgeführt sind, auch bei vorkommenden erhöh ten Drücken im Kühlflüssigkeitskreislauf eine Dichtheit gewährleistet, die einen für den Motor gefährlichen Kühlwasserverlust zuverlässig ausschließt.

Diese Aufgabe wird gemäß der Erfindung in erster Linie durch die im kennzeichnenden Teil des Anspruchs 1 enthaltenen Merkmale gelöst. Die Erfindung sowie vorteilhafte weitere Ausgestaltungsmerkmale werden anhand der Zeichnung näher beschrieben, in der zwei Ausführungsbeispiele der erfindungsgemäßen Vorrichtung dargestellt sind. Es zeigen

Figur 1 ein erstes Ausführungsbeispiel im Längsschnitt,

Figur 2 das Ausführungsbeispiel der Figur 1 in der Stirnansicht,

Figur 3 ein zweites Ausführungsbeispiel im Längsschnitt,

Figur 4 das Ausführungsbeispiel der Figur 3 in der Stirnansicht, teilweise geschnitten.

Ein zylinderförmiges Wärmetauschergehäuse 1 der dargestellten Vorrichtung besitzt an beiden Gehäusestirnseiten Schlauchanschlußstutzen 2, um unmittelbar in die Kühlflüssigkeitsleitung zwischen einem flüssigkeitsgekühlten Motor und einem Motorkühler insbesondere von Kraftfahrzeugen eingesetzt werden zu können und von der Kühlflüssigkeit direkt durchflossen zu werden. Vorteilhafterweise besitzt das Gehäuse 1 an beiden Stirnseiten gestufte Anschlußstutzen 2, 3, um Kühlmittelschläuche mit in der Praxis bei Kraftfahrzeugen vorkommendem unterschiedlichem Durchmesser aufstecken und mittels Schlauchschellen festklemmen zu können. In dem Gehäuse 1 ist eine in Gehäuselängsrichtung schraubenförmig gewundene Rohrwendel 4 angeordnet, deren Windungen einen Abstand voneinander haben, so daß die Windungen der Rohrwendel ringsum intensiv von der Kühlflüssigkeit umströmt werden können und intensiv Kühlflüssigkeitswärme aufnehmen können, um eine die Rohrwendel durchströmende Flüssigkeit zu erwärmen, wie z. B. das Waschwasser für die Scheibenwaschanlage eines Kraftfahrzeugs. Die Vorrichtung kann aber auch mit großem Vor teil angewendet werden, um ohne zusätzlichen Energieaufwand mit der ohnehin dauernd zur Verfügung stehenden Wärme des Motorkühlwassers kontinuierlich den Dieselkraftstoff für einen Dieselmotor dermaßen vorzuwärmen, daß der Dieselkraftstoff insbesondere in der kalten Jahreszeit optimal fließfähig und zerstäubungsfähig bleibt und hierdurch kraftstoffsparend wirtschaftlich und umweltschonend rußarm im Dieselmotor verbrannt werden kann.

Das Gehäuse 1 ist axial in zwei halbzylindrische Schalen 5 geteilt, die an ihren aneinanderstoßenden Längsrändern dicht miteinander verbindbar sind. Das Gehäuse 1 weist zwei radiale Durchführungshülsen 7 auf, durch die die radial gerichteten Anschlußenden 8 der Rohrwendel 4 hindurchführbar sind. Bei dem dargestellten Ausführungsbeispiel weisen die beiden Durchführungshülsen 7 gleichartig wie die Enden 8 der Rohrwendel 4 in entgegengesetzte radiale Richtungen und sind die Durchführungshülsen 7 am Umfang beider Gehäuseschalen 5 angeordnet. Die Enden 8 der Rohrwendel 4 können auch in die gleiche radiale Richtung weisen, so daß dementsprechend auch die beiden Durchführungshülsen 7 in die gleiche radiale Richtung weisend auf dem Umfang von nur einer Gehäuseschale 5 angeordnet sein können. Auf die durch die Durchführungshülsen 7 herausragenden Rohrwendelenden 8 sind O-Dichtungsringe 9 und danach Überwurfmuttern 10 aufgeschoben, die auf das äußere Ende der Durchführungshülsen 7 aufschraubbar sind und die zusammen mit den O-Ringen 9 die Rohrwendelenden 8 in den Durchführungshülsen 7 kühlflüssigkeitsdicht abdichten. Durch die axiale Unterteilung des Gehäuses 1 in die beiden halbzylindrischen Schalen 5 und durch die Ausbildung der Gehäusedurchführungen für die Rohrwendel aus den Druchführungshülsen 7 kann beim Zusammenbau der Vorrichtung die Rohrwendel 4 bequem zwischen die beiden Gehäuseschalen eingelegt werden und können dabei die radialen Anschlußenden 8 der Rohrwendel 4 bequem durch die Durchführungshülsen 7 hindurchgesteckt werden und dann in einem einfachen und raschen Montagegang mittels der O-Ringe 9 und der Über wurfmuttern 10 einwandfrei und zuverlässig in den Durchführungshülsen 7 eingedichtet werden.

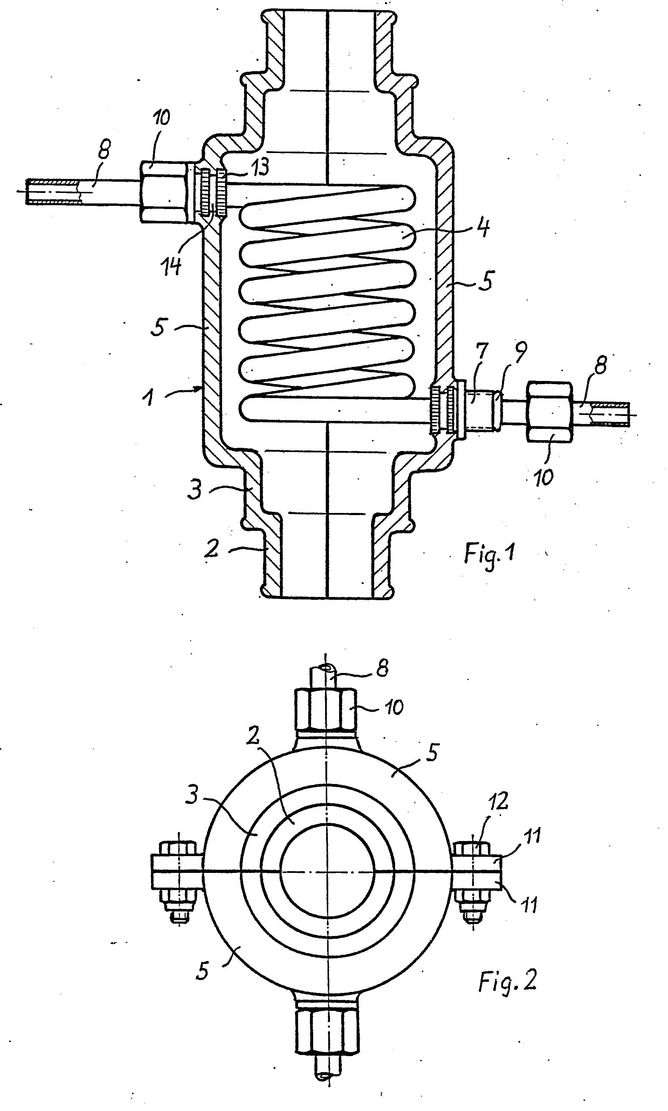

Bei dem in den Figuren 1 und 2 dargestellten Ausführungsbeispiel besteht das Gehäuse aus Guß-oder Spritzgießmaterial, beispielsweise Kunststoff. Bevorzugterweise besteht das Gehäuse aus einem Aluminiumguß, wie er beispielsweise auch für Zylinderköpfe verwendet wird und den Vorzug hat, daß die beiden halbzylindrischen Gehäuseschalen 5 auch bei höheren Temperaturen eine hohe Stabilität und Festigkeit aufweisen und an ihren Längsrändern einwandfrei dicht zusammengespannt bzw. zusammengepreßt werden können. Hierzu besitzen die beiden Gehäuseschalen 5 an ihren Längsrändern nach außen abstehende Laschen 11, an denen die Schalen 5, mit einer Dichtungseinlage zwischen ihren Längsrändern, mittels Spannschrauben 12 dicht zusammenspannbar sind. Die Ausbildung des Gehäuses aus spritz-oder gießbarem Material, insbesondere aus Aluminiumguß, ermöglicht es, daß die Durchführungshülsen 7 sogleich bei der Herstellung der Schalen 5 in die Schalenwandung dicht, undrehbar und längsunverschiebbar eingegossen werden können. Damit die Durchführungshülsen 7 z. B. beim Aufschrauben der Überwurfmuttern 10 sich nicht in der Schalenwandung verdrehen oder längsverschieben und dadurch ihre Dichtheit in der Schalenwandung verlieren, können die Durchführungshülsen 7 an ihrem in die Schalenwandung eingegossenen Ende beispielsweise mit einer ein Verdrehen verhindernden Umfangsrändelung 13 und einer ein Längsverschieben verhindernden ringnutartigen Einschnürung 14 versehen sein.

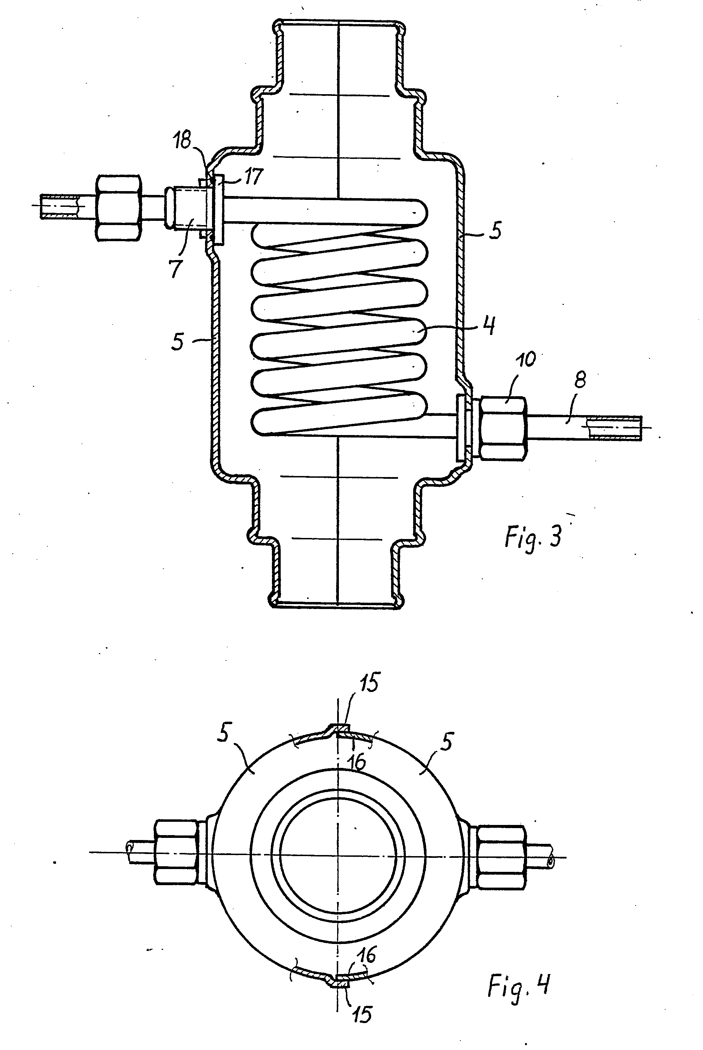

Bei dem in den Figuren 3 und 4 dargestellten Ausführungsbeispiel bestehen die beiden halbzylindrischen Gehäuseschalen 5 aus Blech. Die Längsränder 15 der einen Gehäuseschale sind in radialer Richtung, bei dem dargestellten Ausführungsbeispiel in radialer Richtung nach außen, versetzt und überlappen die Längsränder 16 der anderen Gehäuseschale. An den überlappenden Längsrändern sind die beiden Gehäuseschalen, nach dem anhand der Figuren 1 und 2 geschilderten bequemen Einbau der Rohrwen del 4, dicht und fest miteinander verbunden. Dies kann durch ein in der Technik der Metallverbindungen bekanntes Klebemittel oder durch ein Lötmittel erfolgen. Die sich überlappenden Längsränder der Gehäuseschalen können so weit ineinandergesteckt werden, daß die Längsränder 16 bis an die Abkröpfung der radial versetzten Längsrander 15 anstoßen, wodurch der Überlappungsspalt zwischen den Längsrändern 15 und 16 zum Gehäuseinnenraum ausreichend verschlossen ist, um ein Durchfließen von flüssigem Lötmittel zum Gehäuseinnenraum hin zu verhindern. Die Durchführungshülsen 7 sind, vorzugsweise von der Gehäuseinnenseite her, durch Löcher in der Blechwand der Gehäuseschalen 5 hindurchgesteckt und liegen mit einer an den Durchführungshülsen ausgebildeten flanschartigen Befestigungsschulter 17 an der Innenseite der Blechwand an. Die Befestigung der Durchführungshülsen 7 kann durch eine aufgeschraubte, an der Außenseite der Blechwand anliegende Kontermutter erfolgen, wobei zur Abdichtung der Durchführungshülse in dem Blechwandloch zwischen der Befestigungsschulter 17 und der Blechwand eine Dichtungsscheibe vorgesehen sein kann. Vorteilhafterweise kann die dichte Befestigung der Durchführungshülse 7 an der Blechwand der Gehäuseschale 5 in maschineller Fertigung dadurch erfolgen, daß die Befestigungsschulter 17 einen die Durchführungshülse 7 ringförmig umgebenden Wulst 18 aufweist, mit dem die Befestigungsschulter 17 die Blechwand berührt und an dem die Befestigungsschulter 17 durch eine Induktionsschweißung dicht und fest mit der Blechwand verbunden ist.

## Ansprüche

1. Vorrichtung für Kraftfahrzeuge mit flüssigkeitsgekühltem Motor zum Erwärmen von Scheibenwaschflüssigkeit oder dergleichen, bestehend aus einem zylinderförmigen Wärmeaustauschergehäuse, welches mit Schlauchanschlußstutzen an beiden Gehäusestirnseiten unmittelbar in die Kühlflüssigkeitsleitung zwischen Motor und Motorkühler einsetzbar ist und in dem von der Kühlflüssigkeit durchströmten Gehäuseinnenraum eine von der zu erwärmenden Flüssigkeit durchflossene, in Gehäuselängsrichtung - schraubenförmig gewundene Rohrwendel enthält, deren Enden radial aus dem Gehäuse herausgeführt sind, dadurch gekennzeichnet, daß das Gehäuse (1) axial in zwei halbzylindrische Schalen (5) geteilt ist, die an ihren aneinanderstoßenden Längsrändern dicht miteinander verbindbar sind, daß das Gehäuse zwei radiale Durchführungshülsen (7) aufweist, durch die die radial gerichteten Enden (8) der zwischen die beiden Schalen (5) einlegbaren Rohrwendel (4) hindurchführbar sind, wobei die beiden Durchführungshülsen in die gleiche radiale Richtung weisend auf dem Umfang von einer Schale oder in entgegengesetzte radiale Richtungen weisend am Umfang beider Schalen angeordnet sind, und daß auf das äußere Ende der Durchführungshülsen (7) Überwurfmuttern (10) mit Dichtungsringen (9) zum Abdichten der Rohrwendelenden (8) in den Hülsen aufschraubbar sind.

2. Vorrichtung nach Anspruch 1, dadurch gekennzeichnet, daß das Gehäuse (1) an beiden Stirnseiten gestufte Anschlußstutzen (2, 3) zum Aufstecken und Festklemmen von Kühlmittelschläuchen unterschiedlicher vor kommender Durchmesser aufweist.

3. Vorrichtung nach Anspruch 1 order 2, dadurch gekennzeichnet, daß das Gehäuse (1) aus Guß-oder Spritzgießmaterial, vorzugsweise aus Aluminiumguß, besteht und die beiden Schalen (5) an ihren Längsrändern nach außen abstehende Laschen (11) aufweisen, an denen die Schalen mit einer Dichtungseinlage zwischen ihren Längsrändern miteinander verbindbar sind, vorzugsweise mittels Schrauben (12) zusammenspannbar sind, und daß die Durchführungshülsen (7) undrehbar und längsunverschiebbar in die Schalenwandung dicht eingegossen sind.

4. Vorrichtung nach Anspruch 1 oder 2, dadurch gekennzeichnet, daß die Gehäuseschalen (5) aus Blech bestehen und die Längsränder (15) von einer Schale in radialer Richtung versetzt sind und die Längsränder (16) der anderen Schale überlappen sowie mit diesen dicht und fest verbunden sind und daß die Durchführungshülsen (7) vorzugsweise von der Gehäuseinnenseite her durch Löcher in der Blechwand hinduchgesteckt sind und mit einer an der Innenseite der Blechwand anliegenden Befestigungsschulter (17) ausgebildet sind.

5. Vorrichtung nach Anspruch 4, dadurch gekennzeichnet, daß die Befestigungsschulter (17) einen die Blechwand berührenden Ringwulst (18) aufweist und an diesem durch eine Induktionsschweißung dicht und fest mit der Blechwand verbunden ist.

0 271 821

Fig. 1

Fig. 2

Fig. 3

Fig. 4